# EUROPÄISCHE PATENTSCHRIFT

(11) **EP 2 030 689 B1**
(45) Veröffentlichungstag und Bekanntmachung des Hinweises auf die Patenterteilung: **13.02.2013**
(21) Anmeldenummer: 08162810.9
(22) Anmeldetag: 22.08.2008
(51) Int. Cl.: B01L 9/00, B03C 1/28, G01N 35/00

(54) **Mikroplatten-Träger mit Magneten**
Microplate support with magnets
Supports de microplaquettes dotés d'aimants

(30) Priorität: 31.08.2007 CH 13602007
(43) Veröffentlichungstag der Anmeldung: 04.03.2009
(73) Patentinhaber: Tecan Trading AG, 8708 Männedorf (CH)
(72) Erfinder: Hruschka, Teresa, 5020, Salzburg (AT); Fasching, Gerhard, 5400 Hallein (AT); Niklaus, Patrick, 5020 Salzburg (AT); Niggl, Lutz, 83329 Waging (DE)
(74) Vertreter: OK pat AG

(56) Entgegenhaltungen:
- EP-A- 0 528 708
- WO-A-92/05443
- WO-A-03/090897
- US-A- 4 988 618
- US-A- 5 779 907
- US-B1- 6 514 416

## Beschreibung

Die Erfindung betrifft einen Mikroplatten-Träger für Mikroplatten, in deren Wells sich in einer Flüssigkeit suspendierte Magnetpartikel mit oder ohne daran anhaftenden Proben befinden. Dabei umfasst der Mikroplatten-Träger Permanentmagnete, die Magnetfelder generieren, welche zum Sammeln und Halten der Magnetpartikel am Boden und/oder an den Wänden der Wells dieser Mikroplatte ausgebildet sind. Dadurch können beispielsweise Kanülen einer Mikroplatten-Waschvorrichtung zum Absaugen zumindest eines Teils der Flüssigkeit in die Wells abgesenkt werden, ohne dass diese Kanülen die aufkonzentrierten Magnetpartikel berühren. Die Erfindung betrifft zudem ein entsprechendes Verfahren.

Es sind viele, zum Teil auch automatisierte, Vorrichtungen bekannt, welche dazu dienen, Magnetpartikel von Flüssigkeiten zu trennen. Die verwendeten Magnete sind dabei beispielsweise direkt unter jedem Well einer Mikroplatte angeordnete Ringmagnete. Diese Ringmagnete haben jedoch den Nachteil (vgl. z.B. EP 0 589 636 B1), dass nur eine bestimmte Art von Mikroplatten (z.B. mit V-Boden oder Rundboden) optimiert verwendet werden kann. Unterschiedliche Anordnungen von seitlich die Wells einer Mikroplatte oder andere Behälter annähernden Magnetplatten sind ebenfalls bekannt (vgl. z.B. WO 02/055206 A2).

Ein Reaktionsgefäss-Träger mit Magneten ist aus WO 03/090897 bekannt. Dieser Träger ist in ein System zum automatisierten Durchführen von Laborprozessen integrierbar. Die Magnete des Trägers können als längliche Stabmagnete horizontal oder als kürzere zylindrische Magnete vertikal zwischen den Reaktionsgefässen in Reihen und Spalten angeordnet sein. Dabei werden die Magnete zwischen den Reaktionsgefässen positioniert, wobei bevorzugt nur jede zweite Reihe mit Magneten besetzt wird. Für ein wirkungsvolles Einfangen magnetischer Partikel im Reaktionsgefäss können die Magnete eine vertikal alternierende Polarität aufweisen, offenbart wird jedoch auch die Verwendung von Magneten mit horizontal gleichgerichteter Polarität.

Andere Vorrichtungen umfassen Permanentmagnete, die koaxial unter jedem Well einer Mikroplatte platziert sind. Solche Vorrichtungen haben jedoch den Nachteil, dass der ganze Boden der Wells, zumindest aber der tiefste Punkt (und damit der bevorzugte Absaugort) in diesen Wells mit aufkonzentrierten Magnetpartikeln besetzt ist. Dadurch resultiert ein relativ grosses Restvolumen an Flüssigkeit in den Wells, das ohne signifikanten Verlust von Magnetpartikeln nicht abgesaugt werden kann. Dieses Restvolumen führt zudem zu einem ungenügenden Flüssigkeitsaustausch und dadurch zu einem ineffizienten Waschen.

Gattungsgemässe Träger für Mikroplatten sind z.B. aus US 5,779,907 bekannt. Dieses Dokument offenbart einen magnetischen Separator für Mikroplatten, der als Träger für Mikroplatten in einer relativ fixen Position ausgebildet ist und eine Vielzahl von zylindrischen Magneten aufweist, die in einem 4 x 6 Array angeordnet sind. Diese Magnete dringen von unten in die Zwischenräume zwischen jeweils vier Wells einer Mikroplatte ein und kommen nicht in Kontakt mit den Flüssigkeiten in den Wells dieser Mikroplatte. Die Magnete verursachen eine Konzentration von in einer Flüssigkeit in den Wells suspendierten Magnetpartikeln an den Wänden dieser Wells, so dass die Kanülen einer Wascheinheit in die Wells abgesenkt werden können, ohne dass diese Kanülen die aufkonzentrierten Magnetpartikel berühren.

Ähnliche Träger für Mikroplatten sind auch aus GB 2 300 258 bekannt, welches eine magnetische Trennvorrichtung offenbart, die eine 96-Well Mikroplatte und eine transparente Grundplatte umfasst. Eine Vielzahl von Magneten sind an dieser Grundplatte befestigt, welche an die Grösse der Grundfläche ("Footprint") der Mikroplatte angepasst ist. Die Magnete sind symmetrisch auf der Grundplatte verteilt, so dass jedes dieser Magnete von vier Wells der Mikroplatte umgeben ist. Die Magnete verursachen eine Konzentration von in einer Flüssigkeit in den Wells suspendierten Magnetpartikeln an den Wänden dieser Wells, so dass die flüssigen Inhalte der Wells in einem Reader durchleuchtet und optisch untersucht werden können.

Diese beiden aus dem Stand der Technik bekannten Träger für Mikroplatten haben den Nachteil, dass die Aufkonzentrierung der Magnetpartikel an unterschiedlichen Stellen in den Wells einer Mikroplatte erfolgt, wodurch z.B. die Automation eines Waschprozesses erschwert wird. Für ein automatisiertes Absaugen von Flüssigkeiten ist nur das Zentrum des Bodens der Wells einwandfrei zugängig. Beim Verwenden von Mikroplatten mit Flachboden-Wells führt jedoch ein zentrales Absaugen zu einem ringförmigen Restvolumen, welches die Wascheffizienz beeinträchtigt.

Die Aufgabe der vorliegenden Erfindung ist es, eine alternative Vorrichtung vorzuschlagen, welche die aus dem Stand der Technik bekannten Nachteile eliminiert oder zumindest minimiert.

Die gestellte Aufgabe wird gemäss einem ersten Aspekt durch die Merkmale des unabhängigen Anspruchs 1 gelöst, indem ein Mikroplatten-Träger für eine Mikroplatte vorgeschlagen wird. In den Wells dieser Mikroplatte befinden sich in einer Flüssigkeit suspendierte Magnetpartikel mit oder ohne daran anhaftenden Proben. Der Mikroplatten-Träger umfasst Magnetfelder generierende Permanentmagnete mit je einer magnetischen Achse, wobei die Permanentmagnete zum Sammeln und Halten der Magnetpartikel am Boden und/oder an den Wänden der Wells dieser Mikroplatte ausgebildet sind. Der erfindungsgemässe Mikroplatten-Träger ist dadurch gekennzeichnet, dass er zu jedem Well einer aufgesetzten Mikroplatte zwei, in Bezug auf das Well diametral gegenüber angeordnete Permanentmagnete mit der gleichen gegen das Well gerichteten Polarität umfasst, und dass alle Permanentmagnete des Mikroplatten-Trägers eine gleich ausgerichtete Polarität aufweisen. Zudem stehen die magnetischen Achsen der Permanentmagnete im wesentlichen senkrecht zum Footprint der aufzusetzenden Mikroplatte, und die Permanentmagnete sind mit ihren magnetischen Achsen entlang von Kolonnen-Achsen oder entlang von Reihen-Achsen der aufzusetzenden Mikroplatte so ausgerichtet, dass zwischen den magnetischen Achsen benachbarter Permanentmagnete einer Kolonnen-Achse oder einer Reihen-Achse jeweils ein Well der aufzusetzenden Mikroplatte positionierbar ist. Die Permanentmagnete sind dabei unterhalb der Wells der aufgesetzten Mikroplatte (2) angeordnet.

Die gestellte Aufgabe wird gemäss einem zweiten Aspekt durch die Merkmale des unabhängigen Anspruchs 10 gelöst, indem ein Verfahren zum Bearbeiten von Mikroplatten vorgeschlagen wird. Bei diesem Verfahren zum Bearbeiten von Mikroplatten, in deren Wells sich in einer Flüssigkeit suspendierte Magnetpartikel mit oder ohne daran anhaftenden Proben befinden, wird eine solche Mikroplatte auf einen Mikroplatten-Träger aufgesetzt, welcher Magnetfelder generierende Permanentmagnete mit je einer magnetischen Achse umfasst, wobei mit den Permanentmagneten die Magnetpartikel am Boden und/oder an den Wänden der Wells gesammelt und dort gehalten werden. Das erfindungsgemässe Verfahren ist dadurch gekennzeichnet, dass der Mikroplatten-Träger zu jedem Well einer aufgesetzten Mikroplatte zwei, in Bezug auf das Well diametral gegenüber angeordnete Permanentmagnete bereitstellt, welche die gleiche gegen das Well gerichtete Polarität aufweisen. Zudem weisen alle Permanentmagnete des Mikroplatten-Trägers eine gleich ausgerichtete Polarität auf, und die magnetischen Achsen der Permanentmagnete stehen im wesentlichen senkrecht zum Footprint der aufzusetzenden Mikroplatte. Die Permanentmagnete mit ihren magnetischen Achsen sind entlang von Kolonnen-Achsen oder entlang von Reihen-Achsen der aufzusetzenden Mikroplatte so ausgerichtet, dass zwischen den magnetischen Achsen benachbarter Permanentmagnete einer Kolonnen-Achse oder einer Reihen-Achse jeweils ein Well der aufzusetzenden Mikroplatte positionierbar ist. Die Permanentmagnete werden unterhalb der Wells der aufgesetzten Mikroplatte angeordnet.

Zusätzliche bevorzugte und erfinderische Merkmale ergeben sich jeweils aus den abhängigen Ansprüchen.

Vorteile des erfindungsgemässen Mikroplatten-Trägers umfassen:
- Bei allen Mikroplattentypen (egal ob deren Wells einen Flach-, Rund- oder V-Boden aufweisen oder ob die Wells konisch, pyramidal oder Kegelstumpfförmig ausgebildet sind) wird durch die jeweils zwei gleich gerichteten Permanentmagnete in dem ihnen zugeordneten Well ein zumindest im wesentlichen partikelfreier Raum erzeugt, der sich quer zu einer die beiden Permanentmagnete verbindenden Achse über den gesamten Durchmesser des Wells ausdehnt.
- Am Boden und/oder an den Wänden der Wells einer Mikroplatte wird ein sehr hohes, örtliches Magnetfeld generiert, welches dazu führt, dass der Grossteil der Magnetpartikel in der unmittelbaren Umgebung der Permanentmagnete gesammelt und gehalten wird.
- Bei allen Mikroplattentypen kann die Flüssigkeit so aus den Wells abgesaugt werden, dass ein minimales Restvolumen von wenigen µl in den Wells verbleibt.
- Die Absaugpunkte einer Mikroplatte präsentieren sich in allen Wells mit identischer Geometrie und Anordnung.
- Das sogenannte "kreuzweise Absaugen" kann automatisiert und optimal am untersten Punkt der Wells bzw. an der Peripherie der Flachbodenwells erfolgen.
- Es spielt bei der Verwendung des erfindungsgemässen Mikroplatten-Trägers keine Rolle, ob der Boden der Mikroplatte zwischen den Wells Öffnungen (die z.B. in der Vorrichtung gemäss US 5,779,907 unabdingbar sind) aufweist oder nicht.

Die vorliegende Erfindung wird nun an Hand von schematischen, den Umfang der Erfindung nicht einschränkenden und lediglich bevorzugte Ausführungsbeispiele zeigenden Zeichnungen näher erläutert. Dabei zeigen:
- Fig. 1: eine Draufsicht auf einen Mikroplatten-Träger gemäss einer ersten Ausführungsform mit 108 Permanentmagneten;
- Fig. 2: einen vertikalen Teilschnitt durch den Mikroplatten-Träger von Figur 1 entlang einer Schnittlinie A - A;
- Fig. 3: eine Draufsicht auf einen Mikroplatten-Träger gemäss einer zweiten Ausführungsform mit 104 Permanentmagneten.

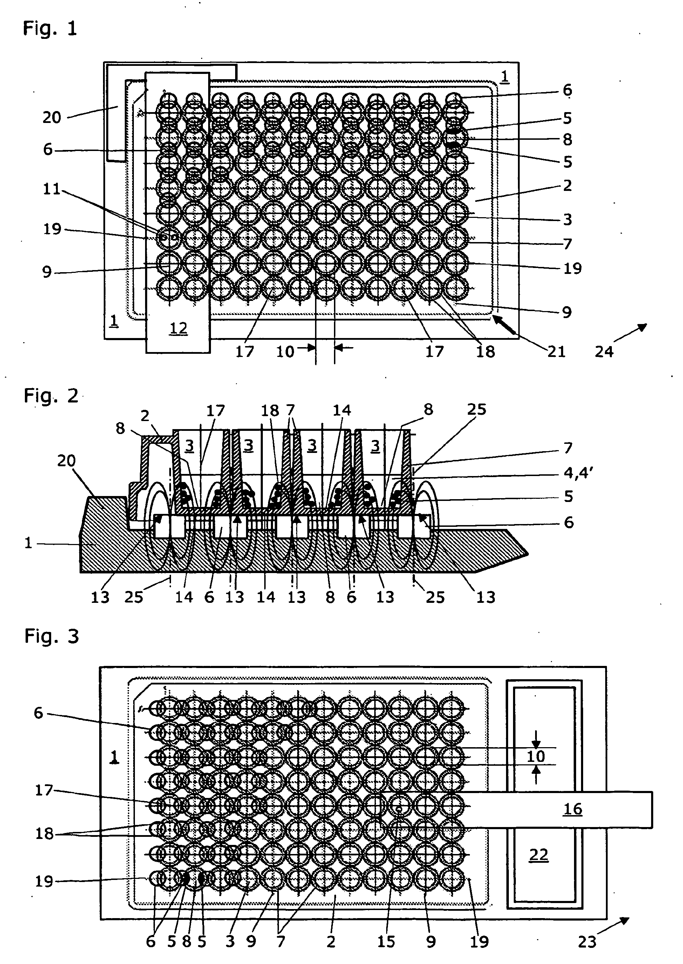

Die Figur 1 zeigt eine Draufsicht auf einen Mikroplattenträger 1 gemäss einer ersten Ausführungsform mit 108 Permanentmagneten 6. Der Mikroplatten-Träger 1 ist zum Aufnehmen einer Mikroplatte 2 geeignet. Als Mikroplatte werden im Zusammenhang mit der vorliegenden Erfindung alle Multiwellplatten bezeichnet, die eine Vielzahl an Wells oder Behälter aufweisen, welche in einem Array angeordnet sind. Speziell bevorzugte Mikroplatten weisen zumindest annähernd die Masse und den Footprint einer Mikroplatte nach dem SBS Standard auf, wie dieser vom American National Standards Institute (ANSI) veröffentlicht wurde.

Bekannt sind beispielsweise Mikroplatten, deren Wells mit einem Rundboden, Flachboden oder V-Boden ausgestattet sind. V-Boden Wells mit kreisförmigem oder mit quadratischem Querschnitt sind bekannt, so dass der Bodenbereich eher konisch oder pyramidenförmig ausgebildet ist. Dabei können die Wells als "normale Wells" oder auch als "Deep Wells" ausgebildet sein. Auch kegelstumpf- oder pyramidenstumpfförmige Wells sind an sich bekannt. Allen Mikroplatten mit den unterschiedlichsten Wellformen ist gemeinsam, dass sie eine normierte Grundfläche, also einen normierten "Footprint" aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm und bei 384-Well (16 x 24) Platten 4.5 mm.

In den Wells 3 einer solchen Mikroplatte 2 befinden sich in einer Flüssigkeit 4 suspendierte Magnetpartikel 5 mit oder ohne daran anhaftenden Proben. Der Mikroplatten-Träger 1 umfasst Magnetfelder generierende Permanentmagnete 6, welche zum Sammeln und Halten der Magnetpartikel 5 am Boden und/oder an den Wänden 7 der Wells 3 dieser Mikroplatte 2 ausgebildet sind. Der erfindungsgemässe Mikroplatten-Träger 1 umfasst zu jedem Well 3 der Mikroplatte 2 zwei, in Bezug auf das Well 3 diametral gegenüber angeordnete Permanentmagnete 6. Diese beiden Permanentmagnete 6 weisen die gleiche gegen das Well 3 gerichtete Polarität auf.

Weil der Einfluss des Magnetfeldes vieler dieser in einem Array angeordneten Permanentmagnete 6, wie dies aus der Figur 1 hervorgeht, auf jeweils zwei benachbarte Wells wirkt, sind alle Permanentmagnete des Mikroplatten-Trägers 1 gleich ausgerichtet. Bevorzugt sind diese jeweils zwei Permanentmagnete 6 pro Well 3 im wesentlichen zylinderförmig ausgebildet, wobei sich die Pole jeweils an der oberen und unteren Kreisfläche der im wesentlichen senkrecht zum Footprint der aufzulegenden Mikroplatte stehenden Zylinder befinden. Somit steht die magnetische Achse 25 aller Permanentmagnete zumindest im wesentlichen senkrecht zur Oberfläche der aufgesetzten Mikroplatte.

Immer jeweils zwei Permanentmagnete 6 des erfindungsgemässen Mikroplatten-Trägers 1 erzeugen in dem diesen zugeordneten Well 3 einen zumindest im wesentlichen partikelfreien Raum 8. Dieser im wesentlichen partikelfreie Raum 8 dehnt sich quer zu einer die beiden Permanentmagnete 6 verbindenden Achse 9 zumindest im wesentlichen über den gesamten Durchmesser 10 des Wells 3 aus. Dieser partikelfreie Raum 8 ermöglicht das Absenken von mindestens einer Kanüle 11 einer Mikroplatten-Waschvorrichtung 12 oder einer Pipettenspitze 15 einer Pipettiervorrichtung 16 in ein Well 3 und das Aspirieren der Flüssigkeit 4 aus diesem Well 3, ohne dass mit dieser Kanüle 11 oder Pipettenspitze 15 eine signifikante Menge der Magnetpartikel 5 abgesaugt wird.

Die erste Ausführungsform des erfindungsgemässen Mikroplatten-Trägers 1 umfasst 108 Permanentmagnete 6, welche in 9 Reihen diametral zu den Wells 3 einer 96-er Mikroplatte 2 stehend angeordnet sind. Es ist bekannt, dass Standardmikroplatten ein 8 x 12 Array von Wells 3 aufweisen, wobei alle diese 96 Wells einen Achsabstand von 9 mm zueinander aufweisen und in 8 Reihen (A - H) bzw. in 12 Kolonnen (1 -12) angeordnet sind. Dabei befindet sich wie gezeigt das Well A1 oben links. Die Kolonnen sind entlang der Kolonnen-Achsen 9 ausgerichtet. Ebenfalls entlang diesen Kolonnen-Achsen 9 sind in dieser ersten Ausführungsform die Permanentmagnete 6 ausgerichtet. Die Zentren dieser vorzugsweise zylinderförmigen Permanentmagnete sind ebenfalls 9 mm voneinander beabstandet. Diese Permanentmagnete bestehen bevorzugt aus Neodynium, Eisen und Bor (NdFeB) und weisen einen Durchmesser vom 4 mm und eine Höhe von 5 mm auf. Die Flussdichte dieser Permanentmagnete ist im Verhältnis zu ihren Dimensionen sehr hoch und beträgt vorzugsweise mehr als 1 Tesla. Die in einem Ausführungsbeispiel verwendeten Magnete wiesen eine effektive Flussdichte von 1.08 bis 1.12 Tesla auf.

Die Permanentmagnete 6 kommen nie mit den Flüssigkeiten 4 oder den Magnetpartikel 5 in den Wells 3 in direkten Kontakt und sind vorzugsweise in den plattenförmigen Mikroplatten-Träger 1 um ca. 2 mm eingesenkt. Der Mikroplatten-Träger 1 ist vorzugsweise aus einem formstabilen Kunststoff, wie z.B. POM (Polyoxymethylen oder Polyacetal) gefertigt. Dabei wird der Mikroplatten-Träger 1 bevorzugt im Spritzgussverfahren hergestellt, wobei die Vertiefungen für das Einsenken der Permanentmagnete 6 vorzugsweise ausgespart werden. Die Permanentmagnetzylinder werden dann in die entsprechenden Vertiefungen passend eingesetzt oder in diesen Vertiefungen angeklebt. Es kann an der Rückseite des Mikroplatten-Trägers 1 auch eine magnetisierbare Metallplatte (z.B. aus Nickel oder Eisen) befestigt werden (nicht gezeigt), welche das Herausfallen oder das unbeabsichtigte Heraufziehen der Permanentmagnete aus ihren Vertiefungen verhindern hilft. Zudem wird durch eine solche Metallplatte die Montage der Permanentmagnete im erfindungsgemässen Mikroplattenträger 1 vereinfacht.

Als Magnetpartikel 5 werden vorzugsweise sogenannte "paramagnetische Beads" verwendet, wie diese seit langem in der Fachwelt bekannt sind. Schematisch als Rechteck eingezeichnet ist in Figur 1 zudem eine Mikroplatten Waschvorrichtung 12 bzw. ein Waschkopf 12 einer solchen Waschvorrichtung. Derartige Waschköpfe sind bekannt und weisen beispielsweise eine Reihe von acht Kanülen 11 auf, mit welchen aus allen Wells 3 einer Kolonne (hier Kolonne 1) gleichzeitig Flüssigkeit 4 abgesaugt werden kann. Über die gleiche oder eine weitere Kanüle kann daraufhin eine neue Flüssigkeit in diese acht Wells eingebracht werden. Es sind jedoch auch Waschköpfe 12 bekannt, welche je 8, 16 oder gar je 96 (also 192 Kanäle) bzw. 384 Ansaug- und Dispens-Kanülen umfassen, so dass in allen Wells 3 einer Mikroplatte 2 gleichzeitig abgesaugt und ohne Wechsel des Waschkopfes 12 dispensiert werden kann. Gerade das Verwenden von solchen Kanülen-Arrays wird durch den vorliegenden erfindungsgemässen Mikroplatten-Träger 1 begünstigt, weil in allen Wells 3 einer Mikroplatte 2 die Magnetpartikel 5 oder "Beads" an den jeweils identischen Orten am Boden und/oder an den Wänden gesammelt und gehalten werden. Dies vereinfacht offensichtlich das Steuern der Kanülen-Arrays, weil alle Kanülen 11 eines Waschkopfes 12 einer exakt gleichen Situation und Geometrie der Magnetpartikelanordnung begegnen. Dadurch kann bei allen Kanülen die gleiche optimale Position zum Absaugen der Flüssigkeit aus den Wells gewählt werden.

Es versteht sich von selbst, dass die beste Position der Kanülen zum Absaugen von Flüssigkeiten aus Wells mit einem Rund- oder V-Boden, der tiefste Punkt des Wells 3 ist, der sich im Zentrum 17 des Wells befindet. Anders verhält es sich mit den Flachbodenwells, egal ob der flach Boden nun den ganzen Durchmesser 10 des Wells betrifft oder ob nur ein reduzierter, zentraler Teil des Bodens eines Kegelstumpf förmigen Wells abgeflacht ist. Bei flachen Böden soll am Rand des Bodens, also in seiner Peripherie 18 abgesaugt werden, damit nach dem Absaugen keine ringförmigen Restvolumina zurückbleiben, welche die Wascheffizienz erheblich beeinträchtigen.

Unter dem Ausdruck "Waschvorrichtungen für Mikroplatten" werden im Zusammenhang mit der vorliegenden Erfindung Geräte verstanden, mit denen in den Wells einer Mikroplatte Magnetpartikel und/oder biologische Proben, die in freier Suspension oder an den Magnetpartikeln angebunden vorhanden sind, gewaschen werden können. Der Begriff "Waschen" umfasst dabei alle bekannten Behandlungsschritte der Magnetpartikel und/oder biologische Proben mit Flüssigkeiten, wie z.B. Pufferlösungen.

Unter dem Ausdruck "Wascheffizienz" wird im Zusammenhang mit der vorliegenden Erfindung das Verhältnis des Volumens der ausgetauschten Flüssigkeit zum Volumen der nach dem Waschschritt im Well verbleibenden, ursprünglichen Flüssigkeit verstanden. Angestrebt wird ein möglichst vollständiger Austausch bzw. ein möglichst geringer Anteil der nach dem Absaugen im Well verbleibenden, ursprünglichen Flüssigkeit.

Die Figur 2 zeigt einen vertikalen Teilschnitt durch den Mikroplatten-Träger 1 von Figur 1 entlang einer Schnittlinie A - A. Der erfindungsgemässe Mikroplatten-Träger 1 umfasst Magnetfelder generierende Permanentmagnete 6, welche zum Sammeln und Halten der Magnetpartikel 5 am Boden 14 und/oder an den Wänden 7 der Wells 3 dieser Mikroplatte 2 ausgebildet sind. Der Mikroplatten-Träger 1 umfasst zu jedem Well 3 der Mikroplatte 2 zwei, in Bezug auf das Well 3 diametral gegenüber angeordnete Permanentmagnete 6, welche die gleiche gegen das Well 3 gerichtete Polarität aufweisen. Die jeweils zwei Permanentmagnete 6 sind im wesentlichen zylinderförmig ausgebildet sind, wobei sich immer jeweils der Nordpol 13 oder der Südpol (nicht gezeigt) an der oberen Kreisfläche der Zylinder befindet. Tatsächlich spielt es keine Rolle, welcher Pol nach oben oder unten gerichtet ist; wesentlich ist hingegen, dass sämtliche Permanentmagnete 6 des erfindungsgemässen Mikroplatten-Trägers 1 eine gleich ausgerichtete Polarität aufweisen, und dass die magnetische Achse 25 der Permanentmagnete 6 im wesentlichen senkrecht zur Oberfläche bzw. zum Footprint der aufgesetzten Mikroplatte 2 steht.

Der Mikroplatten-Träger 1 umfasst zudem vorzugsweise in einer Ecke einen Wulst 20 und in der gegenüberliegenden Ecke eine Anpresseinrichtung 21. Die Mikroplatte. 2, welche auf den oberen Kreisflächen der Permanentmagnetzylinder 6 liegt, wird mit der Anpresseinrichtung 21 federnd gegen den Wulst 20 gedrückt und nimmt damit eine genau definierte, spielfreie Position auf dem Mikroplatten-Träger 1 ein.

Alternativ kann eine zentrische Fixierung vorgesehen werden (nicht gezeigt), wie diese aus den Patenten EP 1 186 891 B1 und US 7,054,001 B2 bekannt ist und wie diese vor allem bei 384-Well Mikroplatten bevorzugt ist.

Der Mikroplatten-Träger 1 kann als einfache Tragplatte ausgebildet sein (vgl. Fig. 1). Der Mikroplattenträger kann aber auch als Schlitten für eine Mikroplatten-Waschvorrichtung, wie diese an sich bekannt sind, ausgebildet sein (vgl. Fig. 2). Alternativ zu diesen gezeigten Ausführungsformen eines Mikroplatten-Trägers 1 kann dieser auch als sogenannter "Carrier" ausgebildet sein, wie diese zum genau definierten Tragen von beispielsweise drei Mikroplatten auf der Oberfläche des Arbeitstisches einer sogenannten "Workstation" bekannt sind. (nicht gezeigt).

Solche "Workstations" sind bevorzugt automatisierte Systeme zum Probentransfer und zur Probenmanipulation. Bei automatischen Systemen braucht der Anwender nicht alle einzelnen Behandlungsmethoden auszuführen. Eine weitere Gemeinsamkeit solcher bekannten Systeme liegt darin, dass Proben oft in standardisierten Mikroplatten bearbeitet werden. Solche Mikroplatten sind in allen möglichen Formaten erhältlich, umfassen aber typischerweise 96 Probengefässe oder "Wells", die in einem regelmässigen 8 x 12 Raster mit einem 9 mm Achsabstand angeordnet sind. Mikroplatten mit einem Vielfachen (z.B. 384 Wells) oder auch nur einem Teil (z.B. 24 Wells) dieser Well-Zahl oder Dichte werden ebenfalls verwendet. Unterschiedliche Arbeitsstationen können durch einen oder mehrere Roboter zum Tragen der Mikroplatten verbunden werden. Einer oder mehrere sich entsprechend einem Koordinatensystem bewegende Roboter können zum Arbeiten auf einer Arbeitstischoberfläche verwendet werden. Diese Roboter können Platten oder andere Probenbehälter tragen und auch Flüssigkeiten transferieren. Ein zentrales Steuersystem bzw. ein Computer kontrolliert und steuert diese bekannten Systeme, deren hervorragender Vorteil in der kompletten Automatisierung der Arbeitsprozesse liegt. Folglich können solche Systeme über Stunden und Tage betrieben werden, ohne dass ein menschlicher Eingriff notwendig wäre. Der in Fig. 2 gezeigte Mikroplatten-Träger 1 erzeugt mit den jeweils zwei Permanentmagneten 6 in dem ihnen zugeordneten Well 3 einen zumindest im wesentlichen partikelfreien Raum 8, der sich quer zu einer die beiden Permanentmagnete 6 verbindenden Achse über im wesentlichen den gesamten Durchmesser 10 des Flachbodenwells 3 einer Mikroplatte 2 ausdehnt. Wegen der hohen Magnetkraft der vorzugsweise eingesetzten NdFeB-Permanentmagnete 6 werden die Magnetpartikel schon innert einigen Sekunden bis wenigen Minuten am Boden 14 und/oder an den Wänden der Wells 3 gesammelt und dann am Ort gehalten, solange die Mikroplatte 2 auf den Permanentmagneten 6 des Mikroplatten-Trägers 1 liegt und die Flüssigkeit 4 in den Wells 3 keiner Agitation, wie z.B. einer Ultraschallbehandlung, einem Schütteln oder einer Turbulenz durch einfliessende Flüssigkeit unterworfen wird. Die magnetische Achse 25 der Permanentmagnete 6 ist gut erkennbar in dieser Figur 2.

Die Figur 3 zeigt eine Draufsicht auf einen Mikroplatten-Träger 1 gemäss einer zweiten Ausführungsform mit 104 Permanentmagneten. Diese zweite Ausführungsform des erfindungsgemässen Mikroplatten-Trägers 1 umfasst 104 Permanentmagnete 6, welche in 13 Kolonnen diametral zu den Wells 3 einer 96-er Mikroplatte 2 stehend angeordnet sind. Es ist bekannt, dass Standardmikroplatten ein 8x12 Array von Wells 3 aufweisen, wobei alle diese 96 Wells einen Achsabstand von 9 mm zueinander aufweisen und in 8 Reihen (A - H) bzw. in 12 Kolonnen (1 -12) angeordnet sind. Dabei befindet sich wie gezeigt das Well A1 oben links. Die Reihen sind entlang der Reihen-Achsen 19 ausgerichtet. Ebenfalls entlang diesen Reihen-Achsen 19 sind in dieser zweiten Ausführungsform die Permanentmagnete 6 ausgerichtet. Die Zentren dieser vorzugsweise zylinderförmigen Permanentmagnete sind ebenfalls 9 mm voneinander beabstandet.

Der in der Fig. 3 gezeigte Mikroplatten-Träger 1 ist als Schlitten eines sogenannten "Washers", also einer Mikroplatten-Waschvorrichtung 12 ausgebildet und umfasst einen Trog 22 in welchem das zum sogenannten "Priming", d.h. dem initialen Füllen der Washer-Kanülen 11 verwendete Medium gesammelt wird. Der gezeigte Trog 22 weist eine Breite auf, die das Priming der 16 bzw. 32 Kanülen eines 16-Kanal-Washers erlaubt. Gleichzeitig ist jedoch auch schematisch ein Arm einer Pipettiervorrichtung 16 gezeigt, an welchem zumindest eine Pipettenspitze 15 befestigt ist. Zum Arbeiten mit grösseren Systemen, wie Workstations werden of auch Pipettiervorrichtungen 16 verwendet, die beispielsweise 8 individuell heb- und senkbare Pipettenspitzen 15 umfassen (nicht gezeigt). Zudem sind auch Pipettierköpfe bekannt, die beispielsweise 96 oder 384 Pipettenspitzen aufweisen (nicht gezeigt). Gerade das Verwenden von solchen Pipetten-Arrays wird durch den vorliegenden erfindungsgemässen Mikroplatten-Träger 1 begünstigt, weil in allen Wells 3 einer Mikroplatte 2 die Magnetpartikel 5 oder "Beads" an den jeweils identischen Orten am Boden 14 und/oder an den Wänden gesammelt und gehalten werden. Dies vereinfacht offensichtlich das Steuern der Pipetten-Arrays, weil alle Pipettenspitzen 15 einer Pipettiervorrichtung 16 einer exakt gleichen Situation und Geometrie der Magnetpartikelanordnung begegnen. Dadurch kann bei allen Pipettenspitzen 15 die gleiche optimale Position zum Absaugen der Flüssigkeit aus den Wells gewählt werden.

Es versteht sich von selbst, dass die beste Position der Pipettenspitzen zum Absaugen von Flüssigkeiten aus Wells mit einem Rund- oder V-Boden, der tiefste Punkt des Wells 3 ist, der sich im Zentrum 17 des Wells befindet. Anders verhält es sich mit den Flachbodenwells, egal ob der flache Boden 14 nun den ganzen Durchmesser 10 des Wells betrifft oder ob nur ein reduzierter, zentraler Teil des Bodens eines Kegelstumpf förmigen Wells abgeflacht ist. Bei flachen Böden soll am Rand des Bodens, also in seiner Peripherie 18 aspiriert oder abgesaugt werden, damit nach dem Absaugen keine ringförmigen Restvolumina zurückbleiben, welche die Ausbeute erheblich beeinträchtigen.

Beide gezeigten Ausführungsformen unterstützen ein Verfahren zum Bearbeiten von Mikroplatten 2, in deren Wells 3 sich in einer Flüssigkeit 4 suspendierte Magnetpartikel 5 mit oder ohne daran anhaftenden Proben befinden. Bei einem solchen Verfahren wird eine Mikroplatte 2 auf einen Mikroplatten-Träger 1 aufgesetzt, wobei der Träger 1 Magnetfelder generierende Permanentmagnete 6 umfasst, mit welchen die Magnetpartikel 5 am Boden 14 und/oder an den Wänden 7 der Wells 3 gesammelt und dort gehalten werden. Das erfindungsgemässe Verfahren stellt durch die Verwendung der Mikroplatten-Träger 1 zu jedem Well 3 der Mikroplatte 2 zwei, in Bezug auf das Well 3 diametral gegenüber angeordnete Permanentmagnete 6 bereit, welche die gleiche gegen das Well (3) gerichtete Polarität aufweisen.

Wie gezeigt wird so mit den Permanentmagneten 6 des Mikroplatten-Trägers 1 in jedem zwischen ihnen angeordneten Well 3 ein zumindest im wesentlichen partikelfreier Raum 8 erzeugt, der sich quer zu einer die beiden Permanentmagnete 6 verbindenden Achse 9,19 über zumindest im wesentlichen den gesamten Durchmesser 10 des Wells 3 ausdehnt.

Zum Waschen der Magnetpartikel 5 mit oder ohne daran anhaftenden Proben wird vorzugsweise mindestens eine Kanüle 11 einer Mikroplatten-Waschvorrichtung 12 in diesen im wesentlichen partikelfreien Raum 8 in einem Well 3 abgesenkt. Daraufhin kann der Grossteil der Flüssigkeit 4 aspiriert werden, ohne dass mit dieser Kanüle 11 eine signifikante Menge der am Boden und/oder an den Wänden 7 der Wells 3 dieser Mikroplatte 2 gehaltenen Magnetpartikel 5 abgesaugt wird. Der Anteil der in den Wells verbleibenden Restflüssigkeit beträgt dabei wenige µl des Wellinhalts.

In einem nächsten Schritt wird mit mindestens einer Kanüle 11 der Mikroplatten-Waschvorrichtung 12 eine Flüssigkeit 4 in jedes Well 3 der Mikroplatte 2 dispensiert. Dabei werden die am Boden 14 und/oder an den Wänden 7 der Wells 3 dieser Mikroplatte 2 gehaltenen Magnetpartikel 5 durch die Turbulenz der einströmenden Flüssigkeit 4 resuspendiert.

Ein mehrmaliges Wiederholen der beiden eben beschriebenen Schritte führt zu einer effektiv gewaschenen Charge von Magnetpartikeln 6 oder Beads. Ebenfalls können so den Magnetpartikel 6 anhaftende Proben, wie z.B. Proteine und/oder Nukleinsäuren gewaschen werden. Die Proben können anschliessend von den Magnetpartikeln 6 oder Beads abgelöst, also eluiert werden.

Zum Eluieren der an den Magnetpartikeln 5 anhaftenden Proben wird vorzugsweise mindestens eine Pipettenspitze 15 einer Pipettiervorrichtung 16 in diesen im wesentlichen partikelfreien Raum 8 in einem Well 3 abgesenkt. Daraufhin wird der Grossteil der Flüssigkeit 4 aspiriert, ohne dass mit dieser Pipettenspitze 15 eine signifikante Menge der am Boden und/oder an den Wänden 7 der Wells 3 dieser Mikroplatte 2 gehaltenen Magnetpartikel 5 abgesaugt wird.

In einem nächsten Schritt wird mit mindestens einer Pipettenspitze 15 der Pipettiervorrichtung 16 ein Eluent 4' (beispielsweise ein Lösungsmittel) in jedes Well 3 der Mikroplatte 2 dispensiert, wobei die am Boden und/oder an den Wänden 7 der Wells 3 dieser Mikroplatte 2 gehaltenen Magnetpartikel 5 durch die Turbulenz der einströmenden Flüssigkeit 4 resuspendiert und die Proben von den Magnetpartikeln gelöst werden.

Das Resuspendieren der Magnetpartikel 5 oder Beads kann mit einer Schüttelvorrichtung 24 unterstützt werden, auf welche die Mikroplatte 2 zwischendurch transferiert wird.

Im Folgenden können beliebige, jedem Fachmann an sich bekannte Verfahrensschritte ausgeführt werden, wie z.B. ein Inkubationsschritt, bei dem beispielsweise an den Beads anhängende DNA in einem Inkubator bei erhöhter Temperatur thermisch abgelöst wird. In einem Mikroplatten Reader 23 können beispielsweise die Proben an den Beads oder im Eluent 4' an Hand von Fluoreszenzmessungen und/oder Absorptionsmessungen untersucht werden. Dabei können die Proben beispielsweise als Proteine, Polypeptide, Nukleinsäuren oder Polynukleotide vorliegen. Zur weiteren Bearbeitung können die eluierten Proben mit einer Pipettiervorrichtung 16 auf mindestens ein anderes Well 3 derselben oder einer anderen Mikroplatte 2 übertragen werden. Dieses weitere Bearbeiten kann praktisch beliebig gewählt werden und umfasst an sich bekannte Methoden wie beispielsweise die Polymerase-Kettenreaktion mit Nukleinsäuren oder isotachophoretische Untersuchungen an Proteinen.

Besonders bevorzugt wird das Aufsetzen einer Mikroplatte 2 auf den Mikroplatten-Träger 1 und/oder das Transferieren von Mikroplatten-Träger 1 und/oder Mikroplatte 2 zu einer Mikroplatten-Waschvorrichtung 12 bzw. das Transferieren der Mikroplatte 2 zu einer Schüttelvorrichtung 24 oder einem Reader 23 jeweils mit einem rechnergesteuerten Robotarm ausgeführt.

Wenngleich bisher nur das Waschen der Magnetpartikel und/oder Proben in einer Mikroplatten-Waschvorrichtung 12 und das Eluieren der Proben von den Beads mit einer Pipettiervorrichtung 16 im Detail beschrieben wurde, ist dem Fachmann klar, dass auch in einer Mikroplatten-Waschvorrichtung 12 Proben eluiert und mit einer Pipettiervorrichtung 16 Magnetpartikel und/oder Proben in den Wells 3 einer Mikroplatte 2 gewaschen werden können. Dieses Waschen und Eluieren kann in jedem Fall von Hand oder automatisiert erfolgen.

Gleiche Merkmale oder Elemente des erfindungsgemässen Mikroplatten-Trägers 1 sind jeweils mit gleichen Bezugszeichen versehen, auch wenn diese Elemente nicht in allen Fällen im Detail beschrieben sind. Kombinationen der gezeigten bzw. beschriebenen Ausführungsformen gehören zum Umfang der vorliegenden Erfindung.

### Bezugszeichenliste:

- 1: Mikroplatten-Träger
- 2: Mikroplatte
- 3: Well
- 4: Flüssigkeit
- 4': Eluent
- 5: Magnetpartikel, Beads
- 6: Permanentmagnete
- 7: Wände der Wells
- 8: im wesentlichen partikelfreier Raum
- 9: Kolonnen-Achse
- 10: Durchmesser der Wells
- 11: Kanülen
- 12: Mikroplatten-Waschvorrichtung, Waschkopf
- 13: Nordpol
- 14: Boden der Wells
- 15: Pipettenspitze
- 16: Pipettiervorrichtung, Pipettierkopf
- 17: Zentrum
- 18: Peripherie
- 19: Reihen-Achse
- 20: Wulst
- 21: Anpresseinrichtung
- 22: Trog
- 23: Reader
- 24: Schüttelvorrichtung
- 25: magnetische Achse der Permanentmagnete

## Patentansprüche

1. Mikroplatten-Träger (1) für eine Mikroplatte (2), in deren Wells (3) sich in einer Flüssigkeit (4) suspendierte Magnetpartikel (5) mit oder ohne daran anhaftenden Proben befinden, wobei der Mikroplatten-Träger (1) Magnetfelder generierende Permanentmagnete (6) mit je einer magnetischen Achse (25) umfasst, wobei die Permanentmagnete (6) zum Sammeln und Halten der Magnetpartikel (5) am Boden (14) und/oder an den Wänden (7) der Wells (3) dieser Mikroplatte (2) ausgebildet sind, **dadurch gekennzeichnet, dass**
- der Mikroplatten-Träger (1) zu jedem Well (3) einer aufgesetzten Mikroplatte (2) zwei, in Bezug auf das Well (3) diametral gegenüber angeordnete Permanentmagnete (6) mit der gleichen gegen das Well (3) gerichteten Polarität umfasst; und
- alle Permanentmagnete des Mikroplatten-Trägers (1) eine gleich ausgerichtete Polarität aufweisen; und
- die magnetischen Achsen (25) der Permanentmagnete (6) im wesentlichen senkrecht zum Footprint der aufzusetzenden Mikroplatte (2) stehen; und
- die Permanentmagnete (6) mit ihren magnetischen Achsen (25) entlang von Kolonnen-Achsen (9) oder entlang von Reihen-Achsen (19) der aufzusetzenden Mikroplatte so ausgerichtet sind, dass zwischen den magnetischen Achsen (25) benachbarter Permanentmagnete (6) einer Kolonnen-Achse (9) oder einer Reihen-Achse (19) jeweils ein Well (3) der aufzusetzenden Mikroplatte positionierbar ist, und
- die Permanentmagnete (6) unterhalb der Wells (3) der aufgesetzten Mikroplatte (2) angeordnet sind.

2. Mikroplatten-Träger (1) nach Anspruch 1, **dadurch gekennzeichnet, dass** die jeweils zwei Permanentmagnete (6) im wesentlichen zylinderförmig ausgebildet sind, wobei sich der Nordpol (13) oder der Südpol an der oberen Kreisfläche der Zylinder befindet.

3. Mikroplatten-Träger (1) nach Anspruch 1 oder 2, **dadurch gekennzeichnet, dass** die jeweils zwei Permanentmagnete (6) in dem ihnen zugeordneten Well (3) einen im wesentlichen partikelfreien Raum (8) erzeugen, der sich quer zu einer die beiden Permanentmagnete (6) verbindenden Achse (9,19) über im wesentlichen den gesamten Durchmesser (10) des Wells (3) ausdehnt.

4. Mikroplatten-Träger (1) nach einem der vorhergehenden Ansprüche, **dadurch gekennzeichnet, dass** der Mikroplatten-Träger (1) 108 Permanentmagnete (6) umfasst, welche in 9 Reihen diametral zu den Wells (3) einer 96-er Mikroplatte (2) angeordnet sind.

5. Mikroplatten-Träger (1) nach einem der Ansprüche 1 bis 3, **dadurch gekennzeichnet, dass** der Mikroplatten-Träger (1) 104 Permanentmagnete (6) umfasst, welche in 13 Kolonnen diametral zu den Wells (3) einer 96-er Mikroplatte (2) angeordnet sind.

6. Mikroplatten-Träger (1) nach einem der vorhergehenden Ansprüche, **dadurch gekennzeichnet, dass** er zum Aufnehmen von Mikroplatten (2) ausgebildet ist, deren Wells (3) einen Boden (14) aufweisen, der ausgewählt ist aus einer Gruppe, die Flachböden, Rundböden und V-Böden umfasst.

7. Mikroplatten-Waschvorrichtung (12) mit einem Mikroplatten-Träger (1) gemäss einem der Ansprüche 3 bis 6, **dadurch gekennzeichnet, dass** die Mikroplatten-Waschvorrichtung (12) eine Anzahl an Kanülen (11) umfasst, wobei zum Aspirieren der Flüssigkeit aus einem Well (3) zumindest eine Kanüle (11) der Mikroplatten-Waschvorrichtung (12) in dem im wesentlichen partikelfreien Raum (8) dieses Wells (3) positionierbar ist.

8. Pipettiervorrichtung (16) mit einem Mikroplatten-Träger (1) gemäss einem der Ansprüche 3 bis 6, **dadurch gekennzeichnet, dass** die Pipettiervorrichtung (16) eine Anzahl an Pipettenspitzen (15) umfasst, wobei zum Aspirieren der Flüssigkeit aus einem Well (3) zumindest eine Pipettenspitze (15) der Pipettiervorrichtung (16) in dem im wesentlichen partikelfreien Raum (8) dieses Wells (3) positionierbar ist.

9. Mikroplatten-Waschvorrichtung (12) nach Anspruch 7 oder Pipettiervorrichtung (16) nach Anspruch 8, **dadurch gekennzeichnet, dass** zum Aspirieren der Flüssigkeit aus den Wells (3) einer Mikroplatte (2) jede Kanüle (11) der Mikroplatten-Waschvorrichtung (12) oder jede Pipettenspitze (15) der Pipettiervorrichtung (16), die in einem dieser Wells (3) positioniert wird, in der jeweils gleichen Position in dem im wesentlichen partikelfreien Raum (8) dieser Wells (3) positionierbar ist.

10. Verfahren zum Bearbeiten von Mikroplatten (2), in deren Wells (3) sich in einer Flüssigkeit (4) suspendierte Magnetpartikel (5) mit oder ohne daran anhaftenden Proben befinden, wobei eine solche Mikroplatte (2) auf einen Mikroplatten-Träger (1) aufgesetzt wird, der Magnetfelder generierende Permanentmagnete (6) mit je einer magnetischen Achse (25) umfasst, wobei mit den Permanentmagneten (6) die Magnetpartikel (5) am Boden (14) und/oder an den Wänden (7) der Wells (3) gesammelt und dort gehalten werden, **dadurch gekennzeichnet, dass**
- der Mikroplatten-Träger (1) zu jedem Well (3) einer aufgesetzten Mikroplatte (2) zwei, in Bezug auf das Well (3) diametral gegenüber angeordnete Permanentmagnete (6) mit der gleichen gegen das Well (3) gerichteten Polarität bereitstellt; und
- alle Permanentmagnete des Mikroplatten-Trägers (1) eine gleich ausgerichtete Polarität aufweisen; und
- die magnetischen Achsen (25) der Permanentmagnete (6) im wesentlichen senkrecht zum Footprint der aufzusetzenden Mikroplatte (2) stehen; und
- die Permanentmagnete (6) mit ihren magnetischen Achsen (25) entlang von Kolonnen-Achsen (9) oder entlang von Reihen-Achsen (19) der aufzusetzenden Mikroplatte so ausgerichtet werden, dass zwischen den magnetischen Achsen (25) benachbarter Permanentmagnete (6) einer Kolonnen-Achse (9) oder einer Reihen-Achse (19) jeweils ein Well (3) der aufzusetzenden Mikroplatte positionierbar ist, und
- die Permanentmagnete (6) unterhalb der Wells (3) der aufgesetzten Mikroplatte (2) angeordnet werden.

11. Verfahren (1) nach Anspruch 10, **dadurch gekennzeichnet, dass** mit den Permanentmagneten (6) des Mikroplatten-Trägers (1) in jedem zwischen ihnen angeordneten Well (3) ein im wesentlichen partikelfreier Raum (8) erzeugt wird, der sich quer zu einer die beiden Permanentmagnete (6) verbindenden Achse (9,19) über im wesentlichen den gesamten Durchmesser (10) des Wells (3) ausdehnt.

12. Verfahren nach Anspruch 11, **dadurch gekennzeichnet, dass** zum Waschen der Magnetpartikel (5) mit oder ohne daran anhaftenden Proben mindestens eine Kanüle (11) einer Mikroplatten-Waschvorrichtung (12) in diesen im wesentlichen partikelfreien Raum (8) in einem Well (3) abgesenkt, und der Grossteil der Flüssigkeit (4) aspiriert wird, ohne dass mit dieser Kanüle (11) eine signifikante Menge der am Boden (14) und/oder an den Wänden (7) der Wells (3) dieser Mikroplatte (2) gehaltenen Magnetpartikel (5) abgesaugt wird.

13. Verfahren nach Anspruch 11 oder 12, **dadurch gekennzeichnet, dass** mit mindestens einer Kanüle (11) einer Mikroplatten-Waschvorrichtung (12) eine Flüssigkeit (4) in jedes Well (3) der Mikroplatte (2) dispensiert wird, wobei die am Boden (14) und/oder an den Wänden (7) der Wells (3) dieser Mikroplatte (2) gehaltenen Magnetpartikel (5) durch die Turbulenz der einströmenden Flüssigkeit (4) resuspendiert werden.

14. Verfahren nach Anspruch 11, **dadurch gekennzeichnet, dass** zum Eluieren der an den Magnetpartikeln (5) anhaftenden Proben mindestens eine Pipettenspitze (15) einer Pipettiervorrichtung (16) in diesen im wesentlichen partikelfreien Raum (8) in einem Well (3) abgesenkt, und der Grossteil der Flüssigkeit (4) aspiriert wird, ohne dass mit dieser Pipettenspitze (15) eine signifikante Menge der am Boden (14) und/oder an den Wänden (7) der Wells (3) dieser Mikroplatte (2) gehaltenen Magnetpartikel (5) abgesaugt wird.

15. Verfahren nach Anspruch 14, **dadurch gekennzeichnet, dass** mit mindestens einer Pipettenspitze (15) der Pipettiervorrichtung (16) ein Eluent (4') in jedes Well (3) der Mikroplatte (2) dispensiert wird, wobei die am Boden (14) und/oder an den Wänden (7) der Wells (3) dieser Mikroplatte (2) gehaltenen Magnetpartikel (5) durch die Turbulenz der einströmenden Flüssigkeit (4) resuspendiert und die Proben von den Magnetpartikeln gelöst werden.

16. Verfahren nach Anspruch 12 oder 14, **dadurch gekennzeichnet, dass** die mindestens eine Kanüle (11) oder die mindestens eine Pipettenspitze (15) zum Absaugen der Flüssigkeit (4) in das Zentrum (17) eines Rundboden- oder V-Boden-Wells oder an die Peripherie (18) eines Flachboden-Wells abgesenkt wird.

17. Verfahren nach Anspruch 13 oder 15, **dadurch gekennzeichnet, dass** das Resuspendieren mit einer Schüttelvorrichtung (24) unterstützt wird, auf welche die Mikroplatte (2) transferiert wird.

18. Verfahren nach Anspruch 11, **dadurch gekennzeichnet, dass** in diesem im wesentlichen partikelfreien Raum (8) eines Wells (3) Proben in einem Eluent (4') in einem Mikroplatten Reader (23) an Hand von Fluoreszenzmessungen und/oder Absorptionsmessungen untersucht werden.

## Claims

1. Microplate carrier (1) for a microplate (2), in the wells (3) of which magnet particles (5), with or without samples adhering thereon and being suspended in a liquid (4), are located, the microplate carrier (1) comprising permanent magnets (6), each of which have a magnetic axis (25) and generate a magnetic field, wherein the permanent magnets (6) are configured to collect and hold the magnetic particles (5) at the bottom (14) and/or at the walls (7) of the wells (3) of this microplate (2),
**characterized in that**:
- for each well (3) of a microplate (2), which is placed on the microplate carrier (1), the microplate carrier (1) comprises two permanent magnets (6), which are arranged diametrically oppositely relative to the well (3) and which have the same polarity directed towards the well (3); and
- all permanent magnets of the microplate carrier (1) have an identically oriented polarity; and
- the magnetic axes (25) of the permanent magnets (6) are oriented substantially perpendicular to the footprint of the microplate (2) to be placed on; and
- the permanent magnets (6) are oriented with their magnetic axes (25) along column axes (9) or along row axes (19) of the microplate to be placed on, such that between the magnetic axes (25) of neighbouring permanent magnets (6) of a column axis (9) or of a row axis (19), in each case one well (3) of the microplate to be placed on is positionable, and
- the permanent magnets (6) are arranged below the wells (3) of the microplate (2), which is placed on the microplate carrier (1).

2. Microplate carrier (1) according to claim 1, **characterized in that** the respective two permanent magnets (6) are formed substantially cylindrically, wherein the north pole (13) or the south pole is located on the upper circular area of the cylinders.

3. Microplate carrier (1) according to claim 1 or 2, **characterized in that** the respective two permanent magnets (6) generate in the well (3) associated with them a space (8) that is substantially free of particles, which space extends transversely relative to an axis (9, 19) connecting the two permanent magnets (6) across substantially the total diameter (10) of the wells (3).

4. Microplate carrier (1) according to any one of the preceding claim, **characterized in that** the microplate carrier (1) comprises 108 permanent magnets (6), which are arranged in 9 rows diametrically to the wells (3) of a 96-well microplate (2).

5. Microplate carrier (1) according to any one of the claim 1 to 3, **characterized in that** the microplate carrier (1) comprises 104 permanent magnets (6), which are arranged in 13 columns diametrically to the wells (3) of a 96-well microplate (2).

6. Microplate carrier (1) according to any one of the preceding claim, **characterized in that** it is adapted to receive microplates (3), the wells (3) of which have a bottom (14) selected from a group comprising flat bottoms, round bottoms and V-bottoms.

7. Microplate washing device (12) comprising a microplate carrier (1) according to any one of the claims 3 to 6, **characterized in that** the microplate washing device (12) comprises a number of cannulas (11), wherein for aspirating the liquid from a well (3), at least one cannula (11) of the microplate washing device (12) is positionable in the substantially particle-free space (8) of this well (3).

8. Pipetting device (16) comprising a microplate carrier (1) according to any one of the claims 3 to 6, **characterized in that** the pipetting device (16) comprises a number of pipette tips (15), wherein for aspirating the liquid from a well (3), at least one pipette tip (15) of the pipetting device (16) is positionable in the substantially particle-free space (8) of this well (3).

9. Microplate washing device (12) according to claim 7 or pipetting device (16) according to claim 8, **characterized in that** for aspirating the liquid from the wells (3) of a microplate (2), each cannula (11) of the microplate washing device (12) or each pipette tip (15) of the pipetting device (12), which is positioned in one of these wells (3), is positionable in each case in the same position in the substantially particle-free space (8) of these wells (3).

10. Method for treating microplates (2), in the wells (3) of which magnet particles (5), with or without samples adhering thereon and being suspended in a liquid (4) are located, wherein such a microplate (2) is placed on a microplate carrier (1) comprising permanent magnets (6), each of which having a magnetic axis (25) and generating a magnetic field, wherein the magnetic particles (5) are collected at the bottom (14) and/or at the walls (7) of the wells (3) and held there by means of the permanent magnets (6),
**characterized in that**:
- for each well (3) of a microplate (2), which is placed on the microplate carrier (1), the microplate carrier (1) provides two permanent magnets (6), which are arranged diametrically oppositely relative to the well (3) and which have the same polarity directed towards the well (3); and
- all permanent magnets of the microplate carrier (1) have an identically oriented polarity; and
- the magnetic axes (25) of the permanent magnets (6) are oriented substantially perpendicular to the footprint of the microplate (2) to be placed on; and
- the permanent magnets (6) are arranged with their magnetic axes (25) along column axes (9) or along row axes (19) of the microplate to be placed on, such that between the magnetic axes (25) of neighbouring permanent magnets (6) of a column axis (9) or of a row axis (19), in each case one well (3) of the microplate to be placed on is positionable respectively, and
- the permanent magnets (6) are arranged below the wells (3) of the microplate (2) which is placed on the microplate carrier (1).

11. Method according to claim 10, **characterized in that** using the permanent magnets (6) of the microplate carrier (1), in each well (3) situated between the permanent magnets (6), a substantially particle-free space (8) is generated which extends across substantially the total diameter (10) of the wells (3) transversely to an axis (9, 19) connecting the two permanent magnets (6).

12. Method according to claim 11, **characterized in that** for washing the magnetic particles (5) with or without samples adhering thereon, at least one cannula (11) of a microplate washing device (12) is lowered into this substantially particle-free space (8) in a well (3), and the majority of the liquid (4) is aspired without a significant amount of the magnet particles (5), which are held at the bottom (14) and/or at the walls (7) of the wells (3) of this microplate (2), being suctioned off by means of this cannula (11).

13. Method according to claim 11 or 12, **characterized in that** a liquid (4) is dispensed in each well (3) of the microplate (2) by means of at least one cannula (11) of a microplate washing device (12), wherein the magnet particles (5), which are held at the bottom (14) and/or at the walls (7) of the wells (3) of this microplate (2), are resuspended by the turbulence of liquid (4) flowing in.

14. Method according to claim 11, **characterized in that** for eluting the samples adhering to the magnetic particles (15), at least one pipette tip (15) of a pipetting device (16) is lowered into this substantially particle-free space (8) in a well (3), and the majority of the liquid (4) is aspired without a significant amount of the magnet particles (5), which are held at the bottom (14) and/or at the walls (7) of the wells (3) of this microplate (2), being suctioned off by means of this pipette tip (15).

15. Method according to claim 14, **characterized in that** an eluent (4') is dispensed in each well (3) of the microplate (2) by means of at least one pipette tip (15) of the pipetting device (16), wherein the magnet particles (5), which are held at the bottom (14) and/or at the walls (7) of the wells (3) of this microplate (2), are resuspended by the turbulence of liquid (4) flowing in and the samples are detached from the magnet particles.

16. Method according to claim 12 or 14, **characterized in that** the at least one cannula (11) or the at least one pipette tip (15) is lowered into the centre (17) of a round bottom or a V-bottom well or to the periphery (18) of a flat bottom well.

17. Method according to claim 13 or 15, **characterized in that** the resuspending is supported by means of a shaking device (24), onto which the microplate (2) is transferred.

18. Method according to claim 11, **characterized in that** in this substantially particle-free space (8) of a well (3), samples in an eluent (4') are investigated in a microplate reader (23) on the basis of fluorescence and/or absorption measurements.

## Revendications

1. Support (1) de plaque de microtitration pour une plaque de microtitration (2), dans les puits (3) de laquelle se trouvent des particules (5) à aimant avec ou sans des échantillons adhérant sur lesquelles, cependant le support (2) de plaque de microtitration comprend des aimants (6) permanents ayant respectivement un axe (25) magnétique et générant des champs magnétiques, cependant les aimants (6) permanents sont formés pour rassembler et tenir les particules (5) à aimant sur le fond (14) et/ou sur les parois (7) des puits (3) de cette plaque de microtitration (2), **caractérisé en ce que**
- le support (2) de plaque de microtitration comprend deux aimants (6) permanents pour chaque puit (3) d'une plaque microtitration posée, ces deux aimants (6) permanents sont arrangés l'un opposés diamétralement de l'autre relative au puit (3) et ont la même polarité confluée au puit (3); et
- tous les aimants permanents du support (1) de plaque de microtitration ont une polarité confluée également; et
- les axes (25) magnétiques des aimants (6) permanents figurent essentiellement perpendiculaire à l'empreinte de la plaque de microtitration (2) à poser; et
- les aimants (6) permanents avec leurs axes (25) magnétiques sont alignés le long des axes colonne (9) ou le long des axes ligne (19) de la plaque de microtitration à poser de façon que entre les axes (25) magnétiques des aimants (6) permanents voisins d'un axe colonne (9) ou d'un axe ligne (19), respectivement un puit (3) de la plaque de microtitration (2) à poser est positionnable; et
- les aimants (6) permanents sont arrangés au-dessous des puits (3) de la plaque de microtitration (2) posée.

2. Support (1) de plaque de microtitration selon la revendication 1, **caractérisé en ce que** les deux aimants (6) magnétique de chaque puit (3) sont formés essentiellement cylindriques, cependant le pôle Nord (13) ou le pôle Sud se trouve à la surface circulaire supérieure des cylindres.

3. Support (1) de plaque de microtitration selon la revendication 1 ou 2, **caractérisé en ce que** les deux aimants (6) magnétique respective génèrent un espace (8) essentiellement exempt des particules dans le puit (3) associé à eux, lequel espace se prolonge transversal à un axe connectant les deux aimants (6) permanents à travers le diamètre (10) essentiellement total du puit (3).

4. Support (1) de plaque de microtitration selon quelques unes des revendications précédentes, **caractérisé en ce que** le support (1) de plaque de microtitration comprend 108 aimants (6) permanents arrangés dans 9 lignes de façon diamétral relative aux puits (3) d'une plaque de microtitration (2) ayant 96 puits.

5. Support (1) de plaque de microtitration selon quelques unes des revendications 1 à 3, **caractérisé en ce que** le support (1) de plaque de microtitration comprend 104 aimants (6) permanents arrangés dans 13 colonnes de façon diamétral relative aux puits (3) d'une plaque de microtitration (2) ayant 96 puits.

6. Support (1) de plaque de microtitration selon quelques unes des revendications précédentes, **caractérisé en ce que** il est apte à recevoir des plaque de microtitration (2), les puits (3) desquelles ont un fond (14) qui est choisi d'une groupe comprenant des fonds plats, des fonds rondes et des fonds du type V.

7. Dispositif de lavage (12) d'une plaque de microtitration, comprenant un support (1) de plaque de microtitration selon quelques unes des revendications 3 à 6, **caractérisé en ce que** le dispositif de lavage (12) d'une plaque de microtitration comprend un nombre des canules (11), cependant afin d'aspirer du liquide d'un puit (3), au moins une canule (11) du dispositif de lavage (12) d'une plaque de microtitration est positionnable dans l'espace (8) essentiellement exempt des particules de ce puit (3).

8. Dispositif à pipeter (16) comprenant un support (1) de plaque de microtitration selon quelques unes des revendications 3 à 6, **caractérisé en ce que** le dispositif à pipeter (16) comprend un nombre des pointes (15) de pipette, cependant afin d'aspirer du liquide d'un puit (3), au moins une pointe (15) de pipette du dispositif à pipeter (16) est positionnable dans l'espace (8) essentiellement exempt des particules de ce puit (3).

9. Dispositif de lavage (12) d'une plaque de microtitration selon la revendication 7 ou dispositif à pipeter (16) d'une plaque de microtitration selon la revendication 8, **caractérisé en ce que** afin d'aspirer le liquide des puits (3) d'une plaque de microtitration (2), chaque canule (11) du dispositif de lavage (12) d'une plaque de microtitration ou chaque pointes (15) de pipette du dispositif à pipeter (16), qui est positionné dans quelques uns des puits (3), est positionnable dans la même position respectivement dans l'espace (8) essentiellement exempt des particules de ces puits (3).

10. Procédé pour traiter des plaque de microtitration (2), dans les puits desquelles se trouvent des particules (5) à aimant avec ou sans des échantillons adhérant sur lesquelles, cependant une telle plaque de microtitration (2) est posée sur un support (1) de plaque de microtitration comprenant des aimants (6) permanents ayant respectivement un axe (25) magnétique et générant des champs magnétiques, cependant les particules (5) à aimant sont rassemblées sur le fond (14) et/ou sur les parois (7) des puits (3) et là sont tenues par les aimants (6) permanents, **caractérisé en ce que**
- le support (2) de plaque de microtitration fournit deux aimants (6) permanents pour chaque puit (3) d'une plaque de microtitration posée, les deux aimants (6) permanents sont arrangés l'un opposés diamétralement de l'autre relative au puit (3) et ont la même polarité confluée au puit (3); et
- tous les aimants permanents du support (1) de plaque de microtitration ont une polarité confluée également; et
- les axes (25) magnétiques des aimants (6) permanents figurent essentiellement perpendiculaire à l'empreinte de la plaque de microtitration (2) à poser; et
- les aimants (6) permanents avec leurs axes (25) magnétiques sont alignés le long des axes colonnes (9) ou le long des axes ligne (19) de la plaque de microtitration à poser de façon que entre les axes (25) magnétiques des aimants (6) permanents voisins d'un axe colonne (9) ou d'un axe ligne (19), respectivement un puit (3) de la plaque de microtitration (2) à poser est positionnable; et
- les aimants (6) permanents sont arrangés au-dessous des puits (3) de la plaque de microtitration (2) posée.

11. Procédé selon la revendication 10, **caractérisé en ce que** par les aimants (6) permanents du support (1) de plaque de microtitration, un espace (8) essentiellement exempt des particules est généré dans chaque puit (3) situés entre lesquels, lequel espace se prolonge transversal à un axe connectant les deux aimants (6) permanents à travers le diamètre (10) essentiellement total du puit (3).

12. Procédé selon la revendication 11, **caractérisé en ce que** pour laver des particules (5) à aimant avec ou sans des échantillons adhérant sur lesquelles, au moins un canule (11) d'un dispositif de lavage (12) d'une plaque de microtitration est fait descendre dans cet espace (8) essentiellement exempt des particules dans un puit (3) et la majorité du liquide est aspirée sauf qu'une quantité signifiante des particules (5) à aimant tenues au fonds (14) ou à des parois (7) des puits (3) de cette microplaquette (2) est aspirée par ce canule (11).

13. Procédé selon la revendication 11 ou 12, **caractérisé en ce que** par au moins un canule (11) d'un dispositif de lavage (12) d'une plaque de microtitration, un liquide (4) est dispensé dans chaque puit (3) de la plaque de microtitration (2), cependant les particules (5) à aimant tenues au fonds (14) ou à des parois (7) des puits (3) de cette plaque de microtitration (2) sont resuspendues par la turbulence du liquide (4) affluant.

14. Procédé selon la revendication 11, **caractérisé en ce que** pour éluer des échantillons adhérant sur des particules (5) à aimant au moins une pointe (15) de pipette d'un dispositif à pipeter (16) est faite descendre dans cet espace (8) essentiellement exempt des particules dans un puit (3), et la majorité du liquide (4) est aspirée sauf qu'une quantité signifiante des particules (5) à aimant tenues au fonds (14) et/ou à les parois (7) des puits (3) de cette plaque de microtitration (2) est aspirée.

15. Procédé selon la revendication 14, **caractérisé en ce que** par au moins une pointe (15) de pipette du dispositif (16) à pipetter, un éluent (4') est dispensé dans chaque puits (3) de la plaque de microtitration (2), cependant les particules (5) à aimant tenues au fonds (14) ou à des parois (7) des puits (3) de cette plaque de microtitration (2) sont resuspendues par la turbulence du liquide (4) affluant et les échantillons sont détachées des particules magnétiques.

16. Procédé selon la revendication 12 ou 14, **caractérisé en ce que** l'au moins un canule (11) ou l'au moins une pointe (15) de pipette pour aspirer le liquide (4) est fait descendu dans le centre (17) d'un fond ronde ou un fond du type V d'un puits ou à la périphérie (18) d'un puits à fond plat.

17. Procédé selon la revendication 13 ou 15, **caractérisé en ce que** la resuspension est supportée par un dispositif (24) à agiter, sur lequel la plaque de microtitration (2) est transférée.

18. Procédé selon la revendication 11, **caractérisé en ce que** dans cet espace essentiellement exempt des particules d'un puit (3), des échantillons sont examinées dans un lecteur (23) de plaque de microtitration sur la base des mensuration de la fluorescence et/ou de l'absorption.
